# EUROPEAN PATENT APPLICATION

(11) **EP 1 321 854 A2**
(43) Date of publication of application: **25.06.2003**
(21) Application number: 02252334.4
(22) Date of filing: 28.03.2002
(51) Int. Cl.: G06F 9/44

(54) **Object collaborating system and method by type matching**

(30) Priority: 20.12.2001 JP 2001388159
(71) Applicant: FUJITSU LIMITED, Kawasaki-shi, Kanagawa 211-8588 (JP); Amamiya, Makoto, Fukuoka-shi, Fukuoka 815-0083 (JP)
(72) Inventor: Iwao, Tadashige, Fujitsu Limited, Kawasaki-shi, Kanagawa 211-8588 (JP); Wada, Yuji, Fujitsu Limited, Kawasaki-shi, Kanagawa 211-8588 (JP); Okada, Makoto, Fujitsu Limited, Kawasaki-shi, Kanagawa 211-8588 (JP); Amamiya, Makoto, Fukuoka-shi, Fukuoka 815-0083 (JP)
(74) Representative: Hitching, Peter Matthew

(57) **Abstract**

Each object 100 belonging to a network 200 manages loaded functions in a function managing section 10. The function managing section 10 generates an argument type table that provides correspondences between the functions and argument types, and stores the same in an argument type table section 20. When a message input/output section 30 receives a structured message that runs through the network 200, an argument type matching section 40 executes a matching process between an argument type of the received message and argument types of the functions in the argument type table in the argument type table section 20. In the case where the matching between the argument types is established, an executing section 50 is notified of the matching, activates a corresponding function from the function managing section 10, and executes the same. This increases freedom of collaboration between objects connected to a network, thereby allowing object collaboration to be constructed irrespective of object interfaces.

## Description

The present invention relates generally to an object collaborating system that performs collaboration processing such as dialog and coordination among a group of computers or a group of objects, and particularly relates to an object collaborating system that activates and executes corresponding objects by type matching and collaborates the objects with each other.

A distribution system is spreading widely in which a plurality of program modules distributed in a network are linked with each other for performing processing. As a technique for linking program modules distributed over a network, the distributed object system and the technique employing message communication by agents are known.

The former, i.e., the distributed object system, is a technique in which a proxy object of an object present in a computer at a remote place is assigned as a local object and a method corresponding to the local object is invoked from the object, so that program modules are linked with one another.

The latter, i.e., the technique employing message communication by agents, is a technique in which a message is sent to a designated agent so as to have a task executed by the agent. In the foregoing techniques both, it is necessary to clearly designate objects to be invoked, and it also is necessary to define a method for invoking the same.

The foregoing prior art has the following problems.

First of all, the linkage relationship between objects is static and cannot be changed dynamically. Irrespective of the technique employing conventional distributed objects or the technique employing the message communication by agents, an invoking object (hereinafter referred to as "object on the invoking side") has to store identification information of an object to be invoked (hereinafter referred to as "object on the invoked side") and protocol information to be used for invoking the same. This information has to be defined clearly beforehand, and it is impossible to change dynamically an object on the invoked side and a protocol to be employed for invoking an object. Therefore, in the case where an object on the invoked side or a protocol employed for invoking an object is changed, it is necessary to change a relevant program of an object on the invoking side.

In other words, when a plurality of server objects are targeted for linkage for a certain purpose, a client object is needed for linking, and a developer is required to produce a client object to be linked with corresponding server objects. Since the produced client object incorporates a program written in the interface description language (IDL), it is fixed and cannot be changed dynamically. Therefore, every time the server objects to be linked are changed, a corresponding client object for linkage is needed, which means that the number of needed client objects for linkage is equal to the number of combinations of server objects.

Secondly, to construct a distribution system, it is necessary to know very well details of an object interface described in the interface description language (e.g., IDL) and a method for using the same. In other words, one who constructs the system is required to know very well details of an object interface described in IDL, etc., and a method for using the same. He/she also is required to recognize an operation of a single object, and an interface when constructing linkage relationship between objects. In other words, it is necessary to clarify what operation each object independently performs, in what format and with what parameters the data are transferred between objects when a plurality of objects are linked, etc. Description in IDL is a list of interfaces, and considerable experience is required to understand how to use an object with such description.

Thirdly, in the case where an interface of an object on the invoked side is changed, this exerts a significant influence. In the case where an interface of an object on the invoked side is changed, a program part relevant to interface information of the object on the invoked side has to be changed at the object on the invoking side. As the scale of the distribution system increases, such change needs enormous cost and time. Furthermore, such change increases the possibility of producing bugs.

Therefore, with the foregoing in mind, it is an object of the present invention to provide an object collaborating system and method that is capable of increasing freedom of collaboration between objects connected to a network, thereby constructing object collaboration irrespective of interfaces, and flexibly responding to a switch of object interfaces, so as to construct a distribution system.

To achieve the aforementioned object, an object collaborating system by type matching of the present invention enables collaboration of objects belonging to a network, by causing each of the objects to include: a function managing section for managing loaded functions; an argument type table section for storing an argument type table that provides correspondences between the functions managed by the function managing section and argument types; a message input/output section for receiving a structured message that runs through the network; an argument type matching section for executing a matching process between a massage type of the received structured message and argument types of the functions in the argument type table stored by the argument type table section, and retrieving a function corresponding to the matching processing result; and an executing section for executing the function retrieved by the argument type matching section from the function managing section.

The object collaborating system by type matching according to the present invention executes a matching process between a type of a structured message and argument types of functions so as to specify a function to be activated, and executes the same, thereby implementing the collaboration among objects. In other words, there is no need to make an object on the invoking side incorporate a function name and interface information of an object on the invoked side. Besides, since a function is activated according to the matching of a message type with an argument type of the function, the collaboration relationship among objects can be constructed flexibly, and there is no need to know details of interfaces very well. Furthermore, in the case where an interface of a certain object is changed, there is no need to change a program installed in another object. Next, it is preferable that the function managing section includes an argument type table control section, and that in the case where a function is loaded in the function managing section, the argument type table control section detects an argument type of each loaded function, generates an argument type table, and transfers the argument type table to the argument type table section.

Besides, it is preferable also that in the case where a function is unloaded from the function managing section, the argument type table control section detects argument types of functions remaining in the function managing section as a result of the unloading, generates a new argument type table, and transfers the argument type table to the argument type table section.

The foregoing configuration enables dynamic loading and unloading of functions, as well as dynamic generation and modification of an argument type table according to a change in the functions stored, thereby allowing the object collaboration relationship to be constructed and modified flexibly.

Next, it is preferable that the executing section returns to the network a return value of the function generated as a result of the execution of the activated function, as an output structured message from the object, and that a type of the return value is defined as a type of the structured message outputted from the object.

In the foregoing configuration, as a result of the activation and execution of a function in an object, an output message having the type of a return value thereof is outputted, which causes next object collaboration. Thus, object collaborations are executed successively one after another.

Next, it is preferable that the message types and the argument types are defined so as to have hierarchy in which a relationship is provided such that a lower level type is derived from a higher level type, and that in a matching process between a structured message type and argument types of functions in the argument type matching section, the structured message type is matched with an argument type of a function having the same type as the structured message type or a lower level type of derived from the same type as the structured message type.

According to the foregoing configuration, when an argument type table is produced, the hierarchy of the types may be considered, so that a function is produced for each derived argument type. This allows a message of a higher level to activate a function having an argument type of a lower level that is derived from the higher level.

Here, it is possible to make the network hierarchical so as to include a plurality of levels of networks, and to introduce local messages that are used in the local networks of the levels, respectively, and global networks that are used in the networks of all the levels. In this case, each object belonging to a network of a certain level includes an argument type of a local message used in the network of the level, and all the objects commonly include an argument type of a global message in the table.

Furthermore, by providing a processing program that implements the object collaborating system by type matching, the object collaborating system by type matching of the present invention can be constructed readily at low cost by causing a personal computer or the like to read in the processing program.

FIG. 1 is a view schematically illustrating the object collaboration construction by type matching according to the present invention.

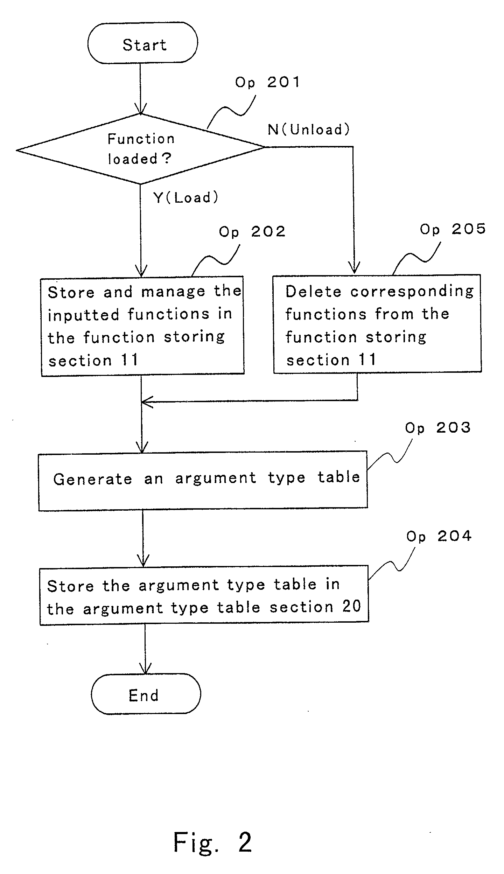

FIG. 2 is a flowchart illustrating function loading and function unloading by the object collaborating system by type matching according to the present invention.

FIG. 3 is a flowchart illustrating an example of an operation of the object collaborating system by type matching according to the present invention.

FIG. 4 is a view illustrating an example of a set of functions loaded in the case of a first embodiment.

FIG. 5 is a view illustrating an example of an argument type table generated when the functions shown in FIG. 4 are loaded in the case of the first embodiment.

FIG. 6 is a view illustrating an operation of unloading functions in the case of the first embodiment.

FIG. 7 is a view illustrating a flow of argument type matching and function execution in the case of the first embodiment.

FIG. 8 is a view illustrating an example of a set of functions having hierarchical argument types to be loaded in the case of a second embodiment.

FIG. 9 is a view illustrating an example of an argument type table generated in the case where the functions shown in FIG. 8 are loaded in the case of the second embodiment.

FIG. 10 is view illustrating a flow of argument type matching and function execution in the case where the argument type table is as shown in FIG. 9.

FIG. 11 is view illustrating a flow of argument type matching and function execution in the case where the argument type table is as shown in FIG. 5.

FIG. 12 is a view illustrating an example of a hierarchical network according to a third embodiment.

FIG. 13 is a view illustrating an example of a set of functions to be loaded in the case of the third embodiment.

FIG. 14 is a view illustrating an example of an argument type table generated in the case where the functions shown in FIG. 13 are loaded according to the third embodiment.

FIG. 15 is a view illustrating a mechanism in which a global message is applied to a local network in a lower level according to the third embodiment.

FIG. 16 is a view illustrating a matching process applied to a local message according to the third embodiment.

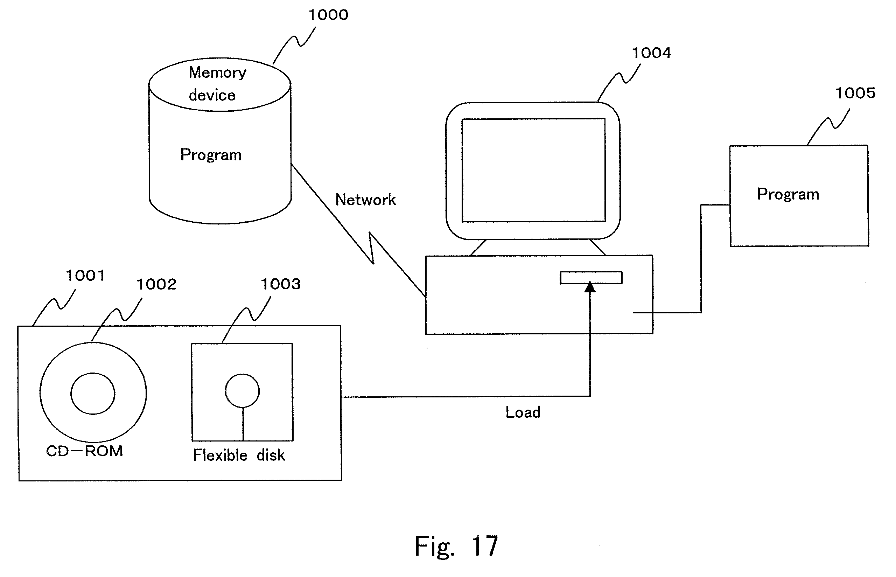

FIG. 17 is a view illustrating examples of recording media storing a processing program that implements an object collaborating system by type matching according to a fourth embodiment of the present invention.

### First Embodiment

An object collaborating system by type matching according to the present invention constructs the collaboration relationship between objects in the following manner. Each object has an argument type table that lists up argument types of loaded functions, activates a function that has an argument type corresponding to a type of a received structured message, and transmits a return value of the function, which is a result of the execution, as an output message to a network. In other words, the distribution system is designed so that the programming associated with an object interface is unnecessary and a plurality of objects are collaborated by autonomous activation of functions according to the argument type of a massage inputted in objects and the argument types of the functions.

Here, the activation of a function is not the activation in response to a call designating the name of a function, but the activation of a function having an argument type matching the type of a structured message.

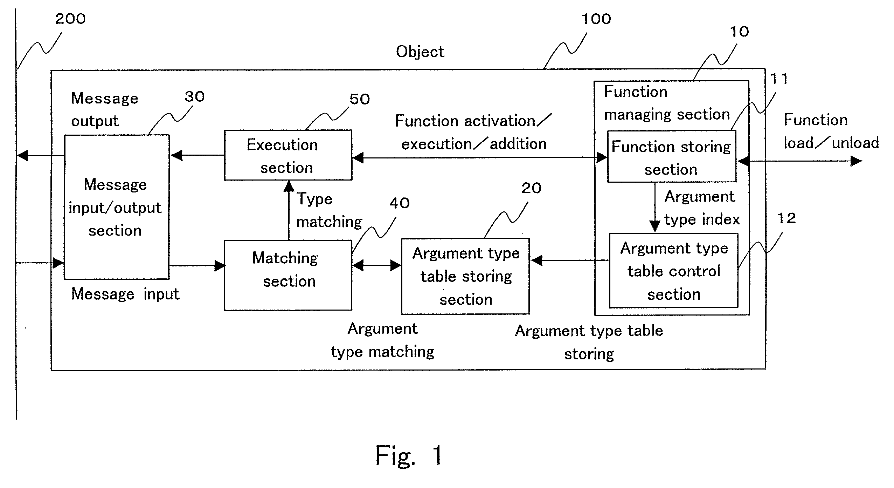

FIG. 1 is a diagram schematically illustrating an outline of object collaboration and structuring.

100 denotes each object, and 200 denotes a network.

The object 100 has the following configuration.

10 denotes a function managing section that stores and manages loaded functions. When an object (entity of a class) is received by the function managing section 10, an argument type table is generated automatically.

The function managing section 10 is to load/unload functions from outside, and is equipped with a function storing section 11 and an argument type table control section 12.

The function storing section 11 stores functions. The function managing section 10 stores functions loaded from outside in the function storing section 11 and manages the same, and deletes unloaded functions from the function storing section 11.

The argument type table control section 12 analyzes functions stored in the function storing section 11 and extracts information relating to the argument types of the functions so as to generate and update an argument type table automatically. Here, the argument type table provides correspondences between functions stored and managed by the function storing section 11 and the argument types of the functions. When functions are loaded, the argument type table control section 12 detects the argument type of each loaded function, generates an argument type table, and transfers the same to an argument type table section 20 that will be described later. In the case where functions are unloaded, the argument type table control section 12 detects the argument types of functions remaining in the function storing section 11 as a result of the unloading, generates a new argument type table, and transfers the same to the argument type table section 20.

20 denotes the argument type table section, which stores an argument type table generated or updated by the argument type table control section 12.

30 denotes a message input/output section that includes an interface with the network 200, a message input part that reads in a structured message which runs through the network 200, and a message output part that receives a structured message from an executing section 50 that will be described later, and outputs an output message to the network 200.

40 denotes an argument type matching section that executes a matching process between a message type of a structured message received by the message input/output section 30 and argument types of functions in the argument type table stored by the argument type table 20, so as to retrieve a function corresponding to the structured message.

50 denotes an executing section that activates the function retrieved by the argument type matching section 40 from the function managing section 10, and executes the same. In the present example, when functions are added as a result of the execution, the executing section 50 also serves to add the functions in the function storing section 11 in the function managing section 10.

Next, a concrete example of an operation of the object collaborating system by type matching is described below. This is an example in which a simple electronic commerce system. A Java object representing a customer is denoted as "Customer. java", a Java object representing a clerk is denoted as "Clerk. java", an order message is denoted as "Order", a message suggesting the supply of a product is denoted as "Service", and a payment message is denoted as "Check". In a description in the form of "O^{type}", "O" represents an instance and "type" represents a type.

First of all, in the case where functions are loaded (operation 201: Y), functions supplied from outside are loaded in the function managing section 10. The function managing section 10 stores the read-in functions in the function storing section 11 and manages the same (operation 202).

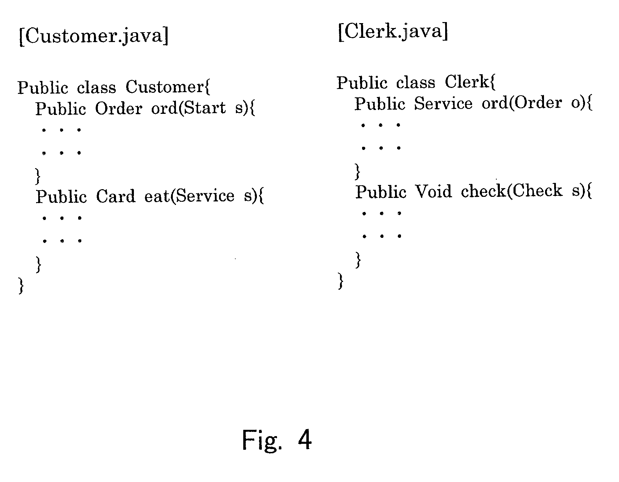

For instance, assume that two objects of the Java class shown in FIG. 4, namely "Customer. java" and "Clerk. java", are loaded. Note that it is assumed that messages (Order, Service, and Check) are defined, respectively.

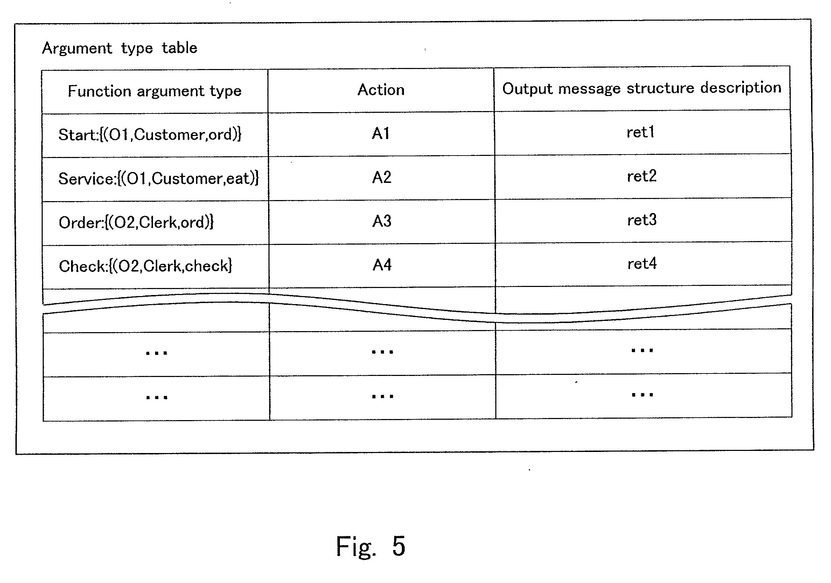

Next, the argument type table control section 12 detects respective argument types of the functions thus loaded, generates an argument type table, and transfers the same to the argument type table section 20 (operation 203). In this example, the argument type table control section 12 obtains indices of argument types from the functions shown in FIG. 4 and generates an argument type table as shown in FIG. 5.

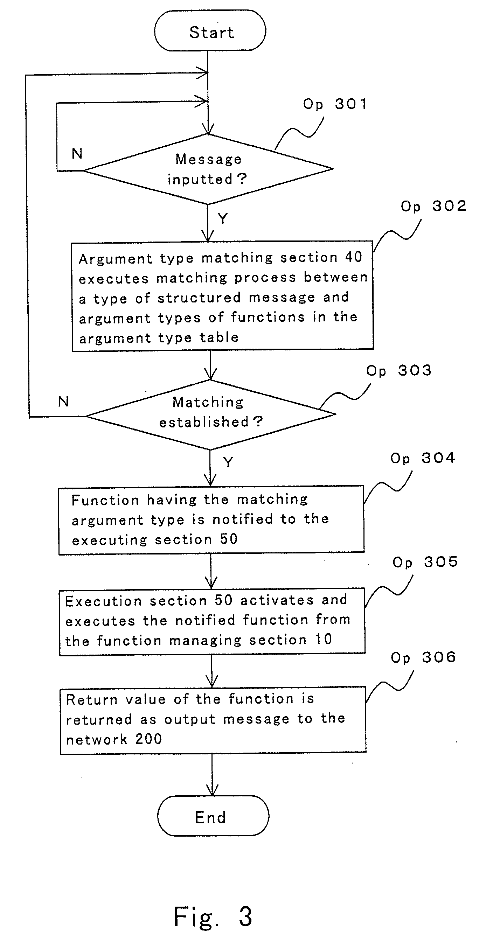

The argument type table control section 12 transfers the argument type table shown in FIG. 5 to the argument type table section 20, and the argument type table section 20 stores the argument type table thus transferred thereto (operation 204). Upon the completion of storage of the argument type table, the processing shifts to an operation 301 shown in FIG. 3.

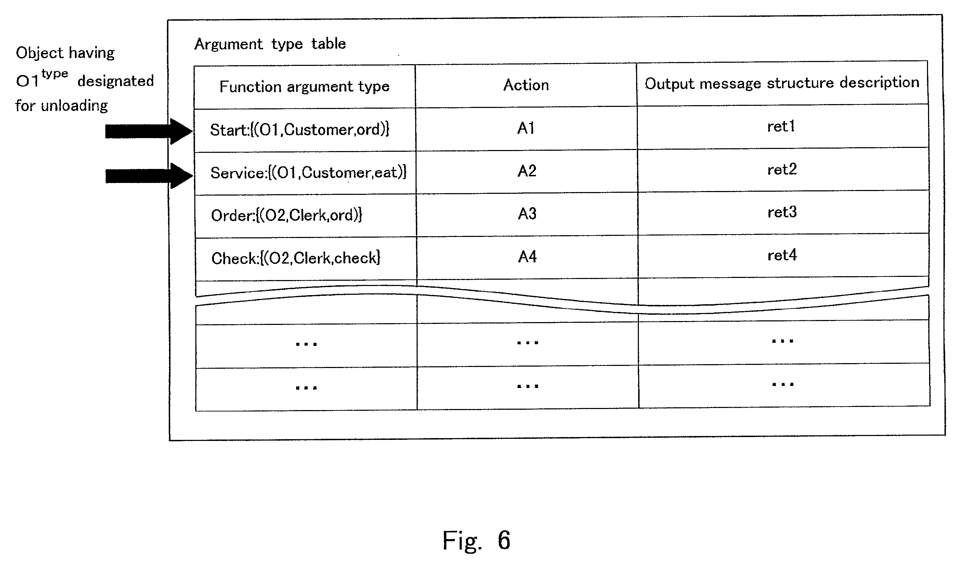

On the other hand, in the case where functions are unloaded (operation 201: N), objects to be deleted are specified with respect to the function managing section 10. For instance, in the case where O1^{customer} is designated to be deleted, two objects having the argument type of "Customer" among the objects in the argument type table shown in FIG. 5, namely, Start: [(01, Customer, ord)] and Service: [(01, Customer, eat)], are unloaded as objects to be deleted. The function managing section 10 deletes the corresponding functions from the function storing section 11, as shown in FIG. 6 (operation 305).

The generation and storing of the argument type table after the unloading of functions may be carried out in the same manner as the aforementioned operations 203 and 204. In other words, the argument type table control section 12 detects argument types of functions remaining as a result of the unloading, generates a new argument-type table, and transfers the same to the argument type table section 20 (operation 203). The argument type table section 20 stores the argument type table thus transferred thereto (operation 204). After the completion of the storage of the argument type table, the processing shifts to an operation 301 shown in FIG. 3.

It should be noted that though the method for activating the operations of loading and unloading functions is not limited, the function activation by type matching according to the present invention may be employed for the activation of functions for loading and unloading functions (loading function, unloading function). In other words, the loading and unloading functions may be activated in response to reception of structured messages having types matching the argument types of the loading and unloading functions. In this case, the function to be loaded is read from the network 200 as a part of the massage. It should be noted that it is necessary that the loading and unloading functions are stored as defaults in the function managing sections 10 of the respective objects, and that the argument type table also stores as defaults the argument types of the loading and unloading functions.

The processing needed upon the loading or unloading of the functions in the above-described operations 201 to 205 is carried out dynamically every time when functions are loaded or unloaded anew.

Thus, in the case where the loading and unloading functions are prepared beforehand and the loading and unloading of functions is carried out as one of the function execution by type matching shown in FIG. 3, the loading and unloading processing has the same flow as that of the function execution by type matching in the operations 301 to 306 shown in FIG. 3, and there is no need to prepare a specific independent flow of operations 201 to 206.

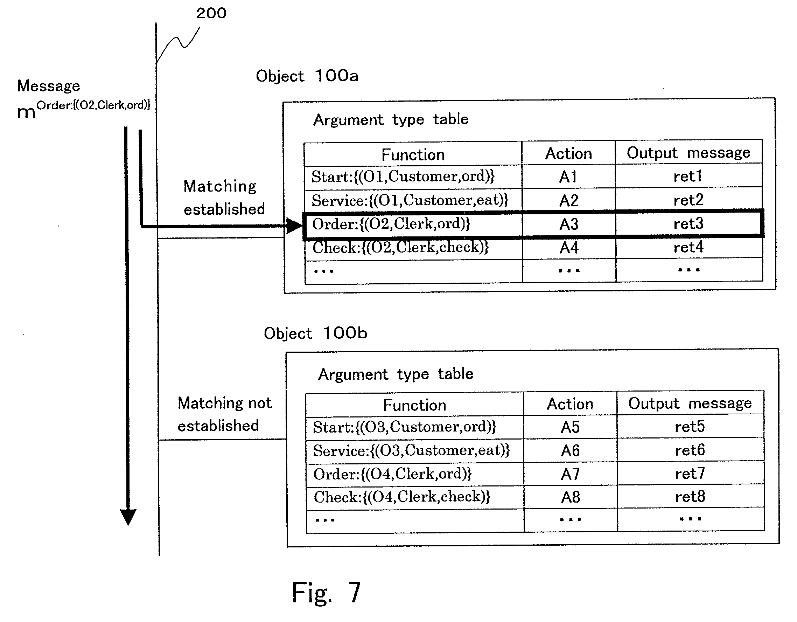

Subsequently, the following will describe a flow of function execution by type matching, while referring to the flowchart of FIG. 3 and a schematic diagram of FIG. 7. FIG. 7 focuses on respective argument type tables of objects on the network 200, for convenience.

Each object 100 monitors a structured message running through the network 200. When the message input/output section 30 receives a structured message (operation 301: Y), the message input/output section 30 transfers the structured message to the argument type matching section 40, and the argument type matching section 40 executes a matching process between the type of the structured message and argument types of functions in the argument type table stored in the argument type table section 20 (operation 302).

In the example of FIG. 7, the structured message "m^{Order:{(O2,Clerk,ord)}}" runs through the network 200, and each object 100 receives the structured message "m^{Order:{(O2,Clerk,ord)}}". Here, the structured message "m^{Order:{(O2,Clerk,ord)}}" has an argument type "Order:{(O2,Clerk,ord)}". The argument type "Order:{(O2,Clerk,ord)}" has 3 parameters and in this message, the values are given as (O2,Clerk,ord). The argument type matching section 40 of each object executes a matching process between the argument type "Order:{(O2,Clerk,ord)}" of the structured message "m^{Order{(O2,Clerk,ord)}}" and each of argument types of functions of each argument type table as shown in FIG. 5.

In the case where an argument type matching the type of the structured message is found to be present in the argument type table as a result of the matching by the argument type matching section 40, the matching is considered to be established (operation 303: Y), and the function having the matching argument type is notified to the executing section 50 (operation 304). In the case where no argument type matching the type of the structured message is present in the argument type table, the matching is not considered to be established (operation 303: N), and the received structured message is ignored. The processing goes back to the operation 301.

In the foregoing example, as shown in FIG. 7, the matching of the argument type "Order:{(O2,Clerk,ord)}" of the structured message "m^{Order:{(O2,Clerk,ord)}}" with the argument type "Order:{(O2,Clerk,ord)}" in the argument type table is established, and the corresponding action A3 is notified to the executing section 50.

The executing section 50 notified by the argument type matching section 40 at the operation 305 activates the function from the function managing section 10 and executes the same (operation 305). In the present example, the action A3 is activated and executed.

Next, as a result of the execution of the function by the executing section 50, a return value of the function is returned as an output message to the network 200 via the message input/output section 30 (operation 306). In the present example, "ret3" (for instance, ret3=02.ord(m)) is returned to the network 200 as an output message.

After transmitting an output message, each object again returns to monitor structure messages flowing through the network 200 (to operation 301).

It should be noted that as to the structured message outputted at the operation 306, its message type is defined with the type of the return value of the function, and the output message flows through the network 200, which is received by the other objects on the network 200, so that the processing through the operations 301 to 306 is executed in an object matching the same.

It should be noted that in the case where the unloading is executed dynamically, the processing returns to the operation 201 in the flowchart shown in FIG. 3.

Thus, a distribution processing system in which a plurality of objects are collaborated is constructed through the transmission and reception of structured messages.

As described above, by the system of object collaboration employing the type matching, a distribution processing system is constructed according to a user's purpose.

### Second Embodiment

In an object collaborating system according to the second embodiment, the types of messages and the argument types of functions are defined so as to be hierarchical, in which a relationship is established such that a type in a lower level in the hierarchy is derived from a type of a higher level in the hierarchy.

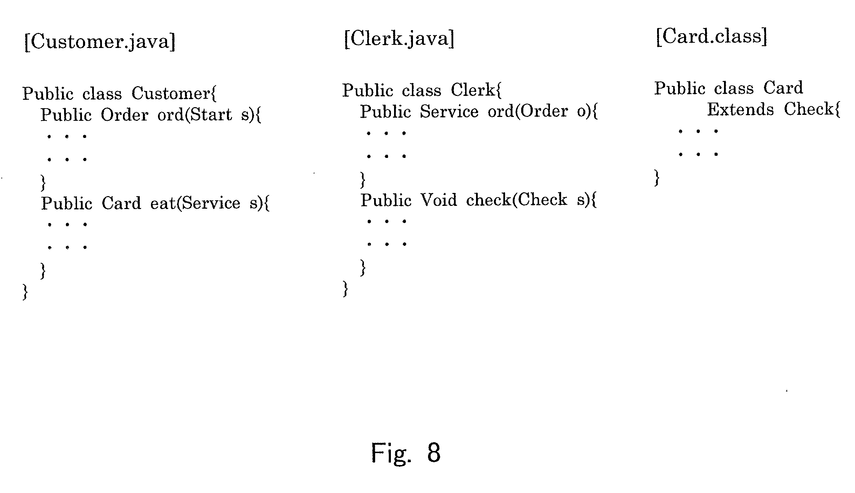

FIG. 8 illustrates an example of functions having hierarchical argument types. As shown in FIG. 8, assume hat a "Card" class derives from a "Check" class. In other words, "Check" is an argument type of a higher level (hereinafter referred to as a higher argument type), while "Card" is an argument type of a lower level (hereinafter referred to as a lower argument type).

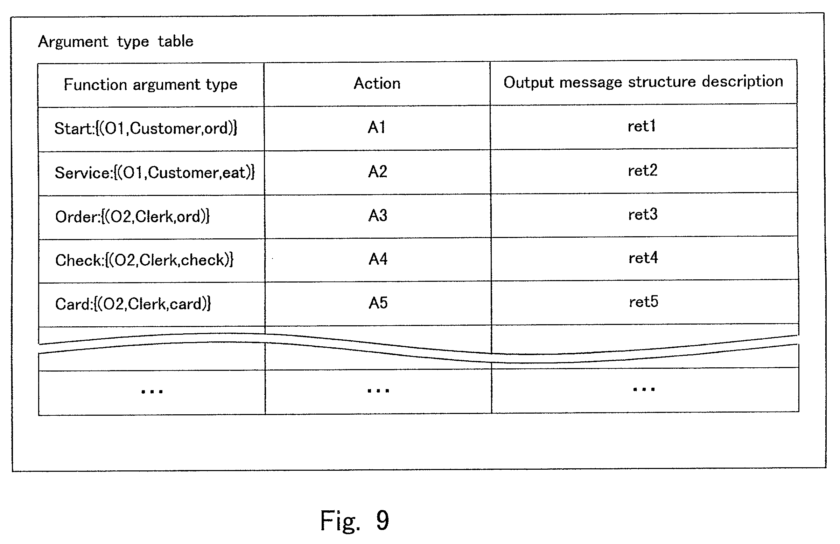

The following will describe an argument type table generated in the case where argument types of messages and argument types of functions are hierarchical. In the case where argument types of messages and argument types of functions are hierarchical and a group of functions as shown in FIG. 8 are loaded, an argument type table generated by the argument type table control section 12 can be arranged as an argument type table as shown in FIG. 9, or alternatively, as an argument type table as shown in FIG. 5 in conjunction with the first embodiment.

According to the argument type table shown in FIG. 9, "Card" as a lower argument type also is described in the argument type table. In other words, all the argument types of the functions are extracted so as to generate the argument type table.

On the other hand, the argument type table shown in FIG. 5 is generated by extracting only higher argument types.

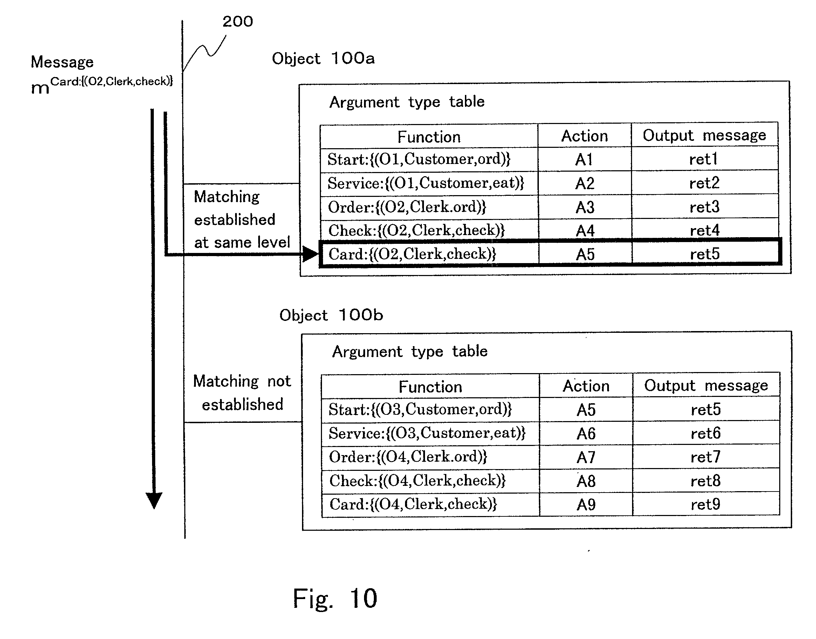

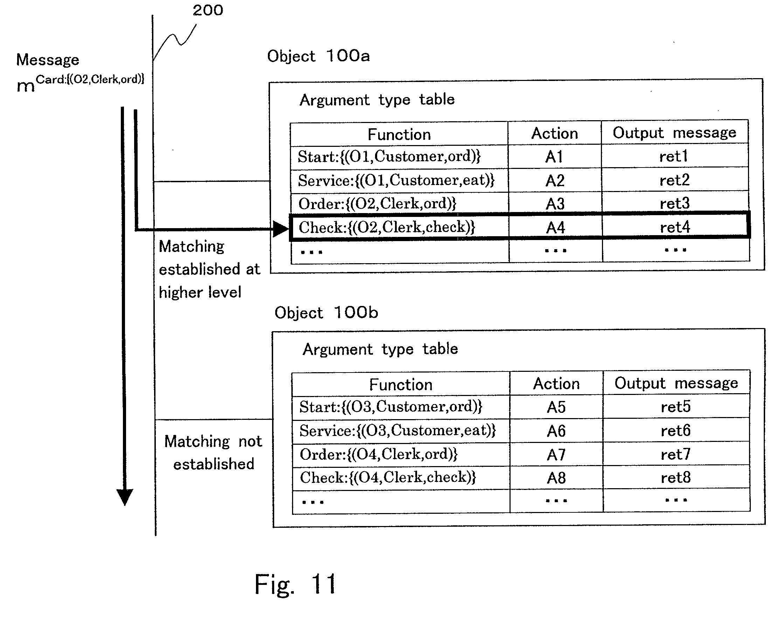

Next, the type matching in the case where the argument types of messages and the argument types of functions are hierarchical will be described, with reference to FIGS. 10 and 11.

FIG. 10 illustrates a flow of the argument type matching and function execution in the case where the argument type table is as shown in FIG. 9.

Assume that a structured message having a lower argument type expressed as "m^{card:{(O2,Clerk,ord)}}" is received from the network 200 via the message input/output section 30 of an object.

The argument type matching section 40 executes a matching process between the argument type of the received message "m^{card:{(O2,Clerk,ord)}}" and respective argument types of functions in the argument type table. Here, the argument type "card:{(O2,Clerk,ord)}" of the input message "m^{card:{(O2,Clerk,ord)}}" matches "card:{(O2,Clerk,ord)}" in the argument type table of FIG. 9. Here, though "check" in the argument type table of FIG. 9 is a higher argument type of the argument type "card", the matching of the argument type "card" of the input message with the argument type "check" of the function is not established, because the matching of the argument type "card" with the argument type "card" is established.

Next, an example of processing in the case where the matching is not established between argument types of the same-level classes is described.

FIG. 11 illustrates a flow of the argument type matching and function execution in the case where the argument type table is as shown in FIG. 5.

Assume that a structured message having a lower argument type expressed as "m^{card:{(O2,Clerk,ord)}}" is inputted from the network 200 via the message input/output section 30 of an object.

The argument type matching section 40 executes a matching process between the argument type of the input message "m^{card:{(O2,Clerk,ord)}}" and respective argument types of functions in the argument type table. Here, no argument type that matches the argument type "card:{(O2,Clerk,ord)}" of the input message "m^{card:{(O2,Clerk,ord)}}" is present in the argument type table of FIG. 5, hence no matching is established. Here, the argument type matching section 40 extends the matching to the argument types of a higher level than the level of the argument type "card". In other words, the argument type matching is carried out again with respect to the argument type "check" in the higher level than that of the argument type "card". Here, the matching is established between the argument type "card:{(O2,Clerk,ord)}" of the input message and the argument type "check:{(O2,Clerk,ord)}" of a function in the argument type table of FIG. 5.

Thus, in the matching between the type of the structured message and the argument types of the functions in the argument type matching section 40, an argument type of an input message is matched with an argument type of the same-level class or a higher level.

The executing section 50 activates the function notified by the argument type matching section 40 from the function managing section 10, and executes the same.

Thus, the object collaborating system by type matching according to the second embodiment allows argument types of the message and the functions to be defined so as to have hierarchy.

### Third Embodiment

In an object collaborating system by type matching according to the third embodiment, the network is defined to be hierarchical, in which a global network and local networks are defined. Structured messages also are made hierarchical, including local messages used specifically in local networks of respective levels, as well as global messages used commonly in the global networks of all the levels.

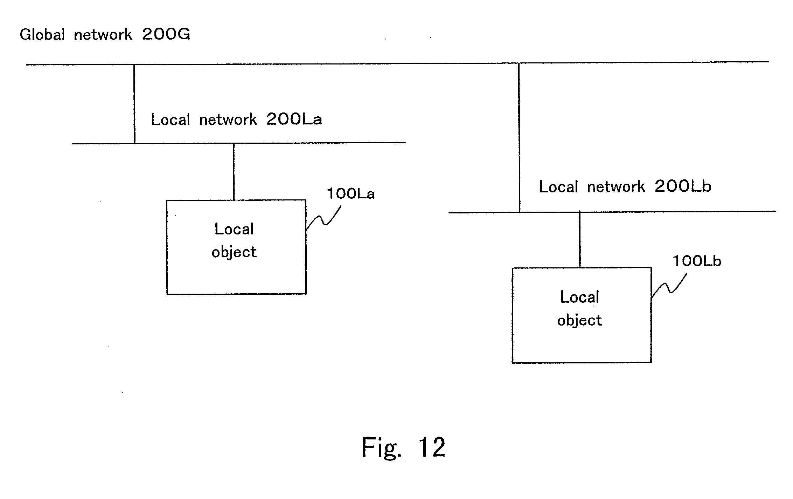

FIG. 12 illustrates an example of a hierarchical network.

In FIG. 12, there are local networks 200La and 200Lb under a global network 200G.

All the messages in the form of "m^{*-}" are global messages, which form is applicable to all the networks, that is, applicable commonly to the global network 200G and all the local networks 200La and 200Lb thereunder in the hierarchy. A message in the form of "m*⁻" is, for instance, a message described as "m*^{-Order}". Here, "*" represents a wild card. The "m*^{-Order}" serves as a message concerning "Order" applicable to all the networks.

A message having the form of "m^{La-}" is a local message for the local network 200La. In other words, it is the form only applicable to the local network 200La, and inapplicable to the global network 200G and the local network 200Lb. The message in the form of "m^{La-}" is, for instance, a message described as "m^{La-Order}". The "m^{La-Order}" serves as a message concerning "Order" only applicable to the local network 200La.

Likewise, a message having the form of "m^{Lb-}" is a local message for the local network 200Lb. In other words, it is the form only applicable to the local network 200Lb, and inapplicable to the global network 200G and the local network 200La. The message in the form of "m^{Lb-}" is, for instance, a message described as "m^{Lb-Order}". The "m^{Lb-Order}" serves as a message concerning "Order" only applicable to the local network 200Lb.

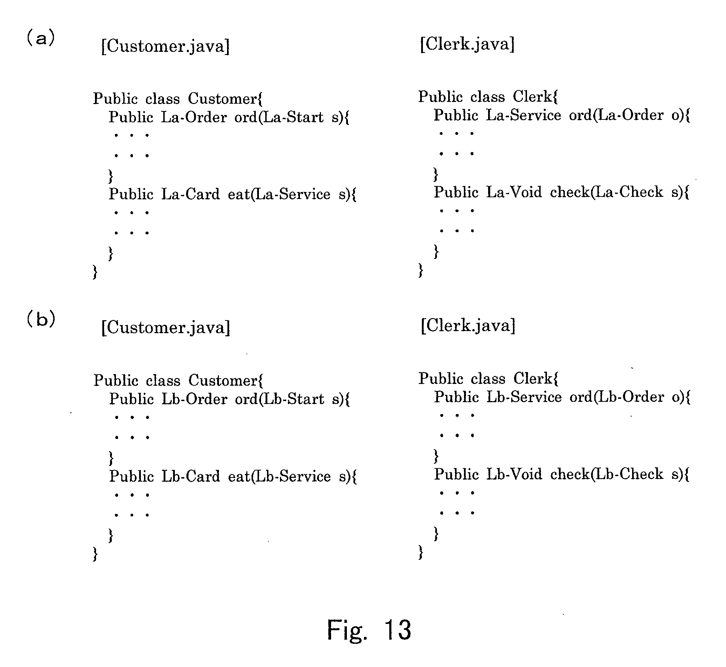

Next, an argument type table generated in the case were the network is hierarchical will be described below. Here, assume that a group of functions shown in FIG. 13A is loaded in an object 100La belonging to the local network 200La, while a group of functions shown in FIG. 13B is loaded in an object 100Lb belonging to the local network 200Lb.

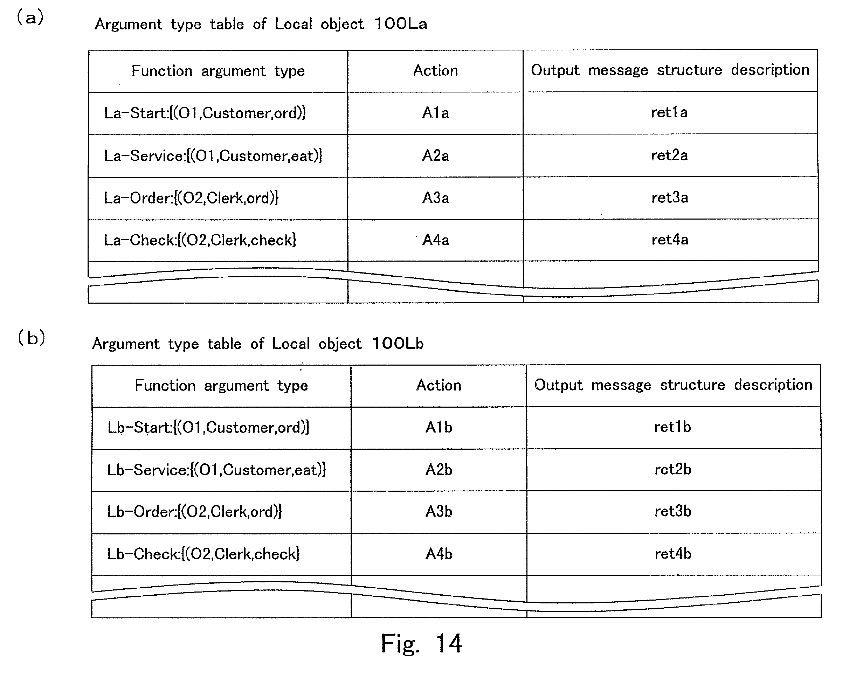

Here, an argument type table shown in FIG. 14A is generated by the argument type table control section 12 of the object 100La belonging to the local network 200La, while an argument type table shown in FIG. 14B is generated by the argument type table control section 12 of the object 100Lb belonging to the local network 200Lb.

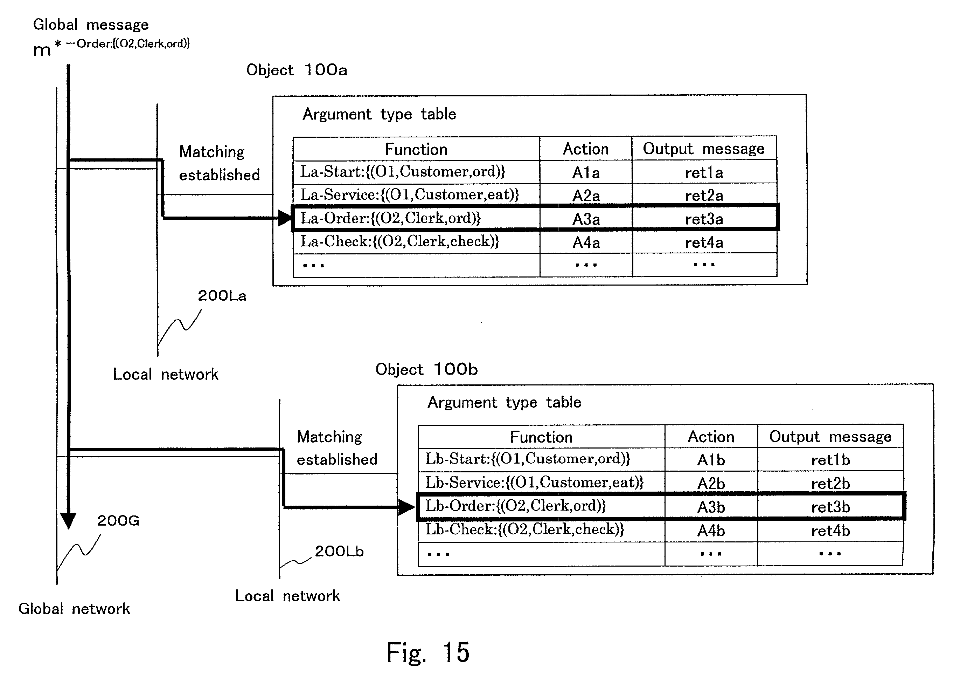

A process of application of a global message to a lower-level local network will be described below, with reference to FIG. 15. For instance, when a global message "m*^{-Order:{(O2,Clerk,ord)}}" runs through the network, the global message runs through the global network 200G as well as the local networks 200La and 200Lb, and is received by the objects 100La and 100Lb.

In the object 100La, the argument type "*-Order:{(O2,Clerk,ord)}" of the global message "m*^{-Order:{(O2,Clerk,ord)}}" is subjected a matching process with the argument types in the argument type table shown in FIG. 14A, while in the object 100Lb, the argument type "*-Order:{(O2,Clerk,ord)}" of the global message "m*^{-Order:{(O2,Clerk,ord)}}" is subjected to a matching process with the argument types in the argument type table shown in FIG. 14B.

Here, since "*" represents a wild card, the matching of the argument type "*-Order:{(O2,Clerk,ord)}" with the argument type "La-Order:{(O2,Clerk,ord)}" is established according to the argument type table shown in FIG. 14 A. Furthermore, the matching of the argument type "*-Orderl{(O2,Clerk,ord)}" with the argument type "Lb-Order:{(O2,Clerk,ord)}" is established according to the argument type table shown in FIG. 14B.

Thus, in the case where an argument type of a local message belonging to an level lower than that of a global message "m*^{-Order:{(O2,Clerk,ord)}}" is included in the argument type table in each of some local objects, the matching of the global message "m*^{-Order:{(O2,Clerk,ord)}}" is established in each of the local objects, and corresponding functions are activated and executed, whereby the collaboration of these objects is implemented.

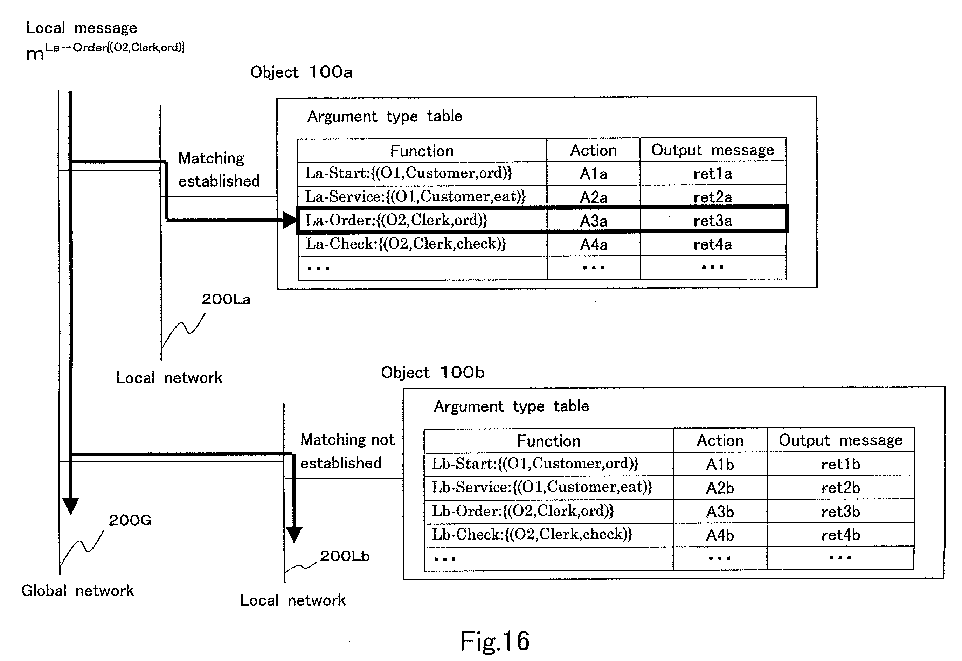

The following will describe a case of a local message, while referring to FIG. 16.

For instance, when the local message "m^{La-Order:{(O2,Clerk,ord)}}" runs through the network, the local message runs through the global network 200G as well as the local networks 200La and 200Lb, and is received by the objects 100La and 100Lb.

In the object 100La, the argument type "La-Order:{(O2,Clerk,ord)}" of the local message "m^{La-Order:{(O2,Clerk,ord)}}" is subjected to a matching process with the argument types in the argument type table shown in FIG. 14A, while in the object 100Lb, the argument type "La-Order:{(O2,Clerk,ord)}" of the local message "m^{La-Order:{(O2,Clerk,ord)}}" is subjected to a matching process with the argument types in the argument type table shown in FIG. 14B.

Here, in the local object 100La, the matching of the argument type "La-Order:{(O2,Clerk,ord)}" of the local message with the argument type "La-Order:{(O2,Clerk,ord)}" in the argument type table is established. Furthermore, in the local object 100Lb, no argument type that matches the argument type "La-Order:{(O2,Clerk,ord)}" of the local message is present in the argument type table, and hence no matching is established.

Thus, as to the local message "m^{La-Order:{(O2,Clerk,ord)}}", the matching thereof is established only in the local object 100La in the local network 200La, to which the foregoing local message is applicable, and corresponding functions are activated and executed, whereby the collaboration of objects are implemented. On the other hand, in the local object 100La in the local network 200Lb, to which the local message "m^{La-Order:{(O2,Clerk,ord)}}" is inapplicable, no matching is established.

As described above, according to the object collaborating system by type matching according to the third embodiment, the network is defined as hierarchical, and the collaboration is implemented by employing global messages and local messages and making object groups hierarchical.

### Fourth Embodiment

An object collaborating system by type matching according to the present invention can be constructed employing various types of computers, by providing a program that describes operations for implementing the above-described configuration, in a form of being stored in a computer-readable recording medium. The recording medium storing the program including operations for implementing the object collaborating system of the present invention may be a portable recording medium 1001 such as a CD-ROM 1002 or a flexible disk 1003, or alternatively a recording medium 1000 in a recording device on the network, or a recording medium 1005 such as a hard disk or a RAM of a computer. Upon the execution of the program, the program is loaded in a computer 1004, and is executed on a main memory.

The object collaborating system by type matching according to the present invention executes a matching process between a type of a structured message and argument types of functions so as to specify a function to be activated, and executes the same, thereby implementing the collaboration among objects. In other words, there is no need to make an object on the invoking side incorporate a function name and interface information of an object on the invoked side. Besides, since a function is activated according to the matching of a message type with an argument type of the function, the collaboration relationship among objects can be constructed flexibly, and there is no need to know details of interfaces very well. Furthermore, in the case where an interface of a certain object is changed, there is no need to change a program installed in another object.

Furthermore, in the object collaborating system by type matching according to the present invention, as a result of the activation and execution of a function in an object, an output message having the type of a return value thereof is outputted, which leads to next object collaboration. Thus, object collaborations are executed successively.

Furthermore, the object collaborating system by type matching according to the present invention allows a concept of hierarchy to be introduced into the argument types. The hierarchy of the types is considered when an argument type table is produced, and a function is produced for each derived argument type, so as to enable argument type matching according to the hierarchy.

## Claims

1. An object collaborating system by type matching, the system enabling collaboration of objects on a network, each object comprising:
a function managing section for managing loaded functions;
an argument type table section for storing an argument type table that provides correspondences between the functions managed by the function managing section and argument types;
a message input/output section for receiving a structured message that runs through the network;
an argument type matching section for executing a matching process between a massage type of the received structured message and argument types of the functions in the argument type table stored by the argument type table section, and retrieving a function corresponding to the matching processing result; and
an executing section for executing the function retrieved by the argument type matching section from the function managing section.

2. The object collaborating system according to claim 1, wherein the function managing section includes an argument type table control section,
wherein
in the case where a function is loaded in the function managing section, the argument type table control section detects an argument type of each loaded function, generates an argument type table, and transfers the argument type table to the argument type table section.

3. The object collaborating system according to claim 2, wherein
in the case where a function is unloaded from the function managing section, the argument type table control section detects argument types of functions remaining in the function managing section as a result of the unloading, generates a new argument type table, and transfers the argument type table to the argument type table section.

4. The object collaborating system according to claim 1, wherein
the executing section returns a return value of the function as an output structured message from the object to the network, the return value being generated as a result of the execution of the activated function, and
a type of the return value is defined as a type of the output structured message from the object.

5. The object collaborating system according to claim 1, wherein
the message types and the argument types are defined so as to have hierarchy in which a relationship is provided such that a lower level type is derived from a higher level type, and
in a matching process between a structured message type and argument types of functions in the argument type matching section, the structured message type is matched with an argument type of a function having the same type as the structured message type or a lower level type derived from the same type as the structured message type.

6. The object collaborating system according to claim 1, wherein
the network is made hierarchical so as to include a plurality of levels of networks,
each level of a network has a local message as a structured message used in said network, and
an argument type table of each object belonging to a level of network includes an argument type of the local message used in said network.

7. The object collaborating system according to claim 6, wherein
the network has a global message as a structured message used in all the levels, and
argument type tables of all objects include an argument type of the global message.

8. An object collaborating method by type matching, the method enabling collaboration of objects belonging to a network, the method comprising, in each of the objects:
managing loaded functions;
storing an argument type table that provides correspondences between the managed functions and argument types;
receiving a structured message that runs through the network;
executing a matching process between a massage type of the received structured message and argument types of the functions in the argument type table, and retrieving a function corresponding to the structured message; and
executing the function retrieved as a result of the matching.

9. The object collaborating method according to claim 8, further comprising:
in the case where a function is loaded, detecting an argument type of the loaded function, and generating an argument type table.

10. The object collaborating method according to claim 9, further comprising:
in the case where a function is unloaded from the managed functions, detecting argument types of functions remaining as a result of the unloading, and generating a new argument type table.

11. The object collaborating method according to claim 8, further comprising:
returning a return value of the function as an output structured message from the object to the network, the return value being generated as a result of the execution of the activated function, and
defining a type of the return value as a type of the output structured message from the object.

12. The object collaborating method according to claim 8, wherein
the massage types of structured messages and the argument types of functions are defined so as to have hierarchy in which a relationship is provided such that a lower level type is derived from a higher level type, and
in a matching process between a structured message type and argument types of functions in the argument type matching section, the structured message type is matched with an argument type of a function having the same type as the structured message type or a lower level type derived from the same type as the structured message type.

13. A processing program for implementing an object collaborating system that constructs an object collaboration relationship between objects, the program comprising the processing operations of:
managing functions loaded in an object;
storing an argument type table that provides correspondences between the managed functions and argument types;
receiving a structured message that runs through the network;
executing a matching process between a massage type of the received structured message and argument types of the functions in the argument type table, and retrieving a function corresponding to the structured message; and
executing the function retrieved as a result of the matching.
